(19) **Europäisches Patentamt / European Patent Office / Office européen des brevets**

(11) **EP 2 404 479 B1**

(12) **FASCICULE DE BREVET EUROPEEN**

(45) Date de publication et mention
de la délivrance du brevet:
**30.11.2016 Bulletin 2016/48**

(21) Numéro de dépôt: **10706233.3**

(22) Date de dépôt: **02.03.2010**

(51) Int Cl.:
*H04W 88/08* $^{(2009.01)}$ *H04W 16/20* $^{(2009.01)}$

(86) Numéro de dépôt international:
**PCT/EP2010/052594**

(87) Numéro de publication internationale:
**WO 2010/100131 (10.09.2010 Gazette 2010/36)**

(54) **CONFIGURATION D'UN RESEAU SANS FIL**

KONFIGURATION EINES DRAHTLOSEN NETZWERKES

WIRELESS NETWORK CONFIGURATION

(84) Etats contractants désignés:
**AT BE BG CH CY CZ DE DK EE ES FI FR GB GR HR HU IE IS IT LI LT LU LV MC MK MT NL NO PL PT RO SE SI SK SM TR**

(30) Priorité: **05.03.2009 FR 0951397**

(43) Date de publication de la demande:
**11.01.2012 Bulletin 2012/02**

(73) Titulaire: **Thomson Licensing**
**92130 Issy-les-Moulineaux (FR)**

(72) Inventeurs:
- **DORE, Renaud**
  **F-35000 Rennes (FR)**
- **STRAUB, Gilles**
  **F-35690 Acigne (FR)**
- **BARON, Francois**
  **F-35235 Thorigne Fouillard (FR)**

- **FONTAINE, Patrick**
  **F-35200 Rennes (FR)**

(74) Mandataire: **Vidon Brevets & Stratégie**
**16B, rue de Jouanet**
**B.P. 90333**
**Technopole Atalante**
**35703 Rennes Cedex 7 (FR)**

(56) Documents cités:
**EP-A1- 1 670 183     WO-A2-2008/004955**

- **JUNSEOK KIM ET AL: "Interference-aware topology control for low rate wireless personal area networks" IEEE TRANSACTIONS ON CONSUMER ELECTRONICS, IEEE SERVICE CENTER, NEW YORK, NY, US, vol. 55, no. 1, 1 février 2009 (2009-02-01), pages 97-104, XP011255261**

**Description**

**1. Domaine de l'invention.**

L'invention se rapporte au domaine des télécommunications et plus précisément à la gestion et la configuration d'un réseau sans fil.

**2. Etat de l'art.**

Selon l'état de la technique, plusieurs architectures de réseau local sans fil WLAN (de l'anglais «Wireless Local Area Network») sont connues. Un exemple se trouve dans EP 1670183. Certaines d'entre elles utilisent un unique point d'accès pour couvrir un espace tel qu'une maison ou le palier d'un immeuble par l'utilisation par exemple d'une puissance d'émission élevée associée à différentes technologies sophistiquées telle que le MIMO (de l'anglais « Multiple Input Multiple Output » ou « entrée multiple sortie multiple » en français) ou l'OFDM (de l'anglais « Orthogonal Frequency Division Multiplexing » ou « Multiplexage par répartition de fréquences orthogonales » en français). Ainsi, un point d'accès d'un réseau Wi-Fi® (basé sur la norme 802.11n) atteint un débit réel de 100 Mbit/s dans un rayon de 90 mètres grâce aux technologies MIMO et OFDM et un point d'accès d'un réseau HiperLAN2 atteint un débit de 50Mbit/s dans un rayon de 45 mètres. De telles architectures basées sur un unique point d'accès présentent l'inconvénient de produire un niveau élevé d'interférences vis-à-vis du voisinage et le risque de ne pas couvrir l'ensemble de l'espace à couvrir, notamment dans certaines zones séparées du point d'accès par des obstacles physiques, tels que des murs ou parois entraînant de fortes atténuations du signal émis. Par ailleurs, l'utilisation d'une puissance d'émission élevée soulève des questions de santé publique concernant les risques liés à une exposition prolongée à de tels rayonnements électromagnétiques.
D'autres architectures de réseau local sans fil utilisent plusieurs points d'accès, avec une puissance d'émission plus faible que dans les architectures à unique point d'accès, répartis dans l'espace à couvrir et reliés entre eux par exemple par une « dorsale » filaire (de l'anglais « wired backbone »). De telles architectures sont cependant compliquées à configurer. Il est en effet difficile de configurer correctement les paramètres de chacun des points d'accès (par exemple le canal de fréquence et la puissance d'émission) pour assurer une couverture totale de l'espace à couvrir avec un minimum d'interférences. Si le niveau de puissance d'émission est trop faible, certaines zones de l'espace risquent de ne pas être couvertes et si la puissance d'émission est trop forte, les interférences entre les différents points d'accès risquent d'être élevées.

**3. Résumé de l'invention.**

L'invention a pour but de pallier à au moins un de ces inconvénients de l'art antérieur.
Plus particulièrement, l'invention a notamment pour objectif d'optimiser la configuration d'un réseau sans fil comprenant au moins un point d'accès.
L'invention concerne un procédé de configuration d'un premier réseau sans fil comprenant au moins un point d'accès. Le procédé comprend une étape de configuration d'au moins un paramètre du au moins un point d'accès du premier réseau sans fil en fonction d'au moins une partie d'un bilan de liaison d'un deuxième réseau sans fil comprenant au moins deux noeuds, les noeuds étant positionnés dans un espace physique déterminé, les premier et deuxième réseaux sans fils étant physiquement différents.
Selon une caractéristique spécifique, le premier réseau sans fil utilise un premier canal physique et le deuxième réseau sans fil utilise un deuxième canal physique, les premier et deuxième canaux physiques étant différents.
Selon une caractéristique particulière, le procédé comprend une étape de détermination de l'espace physique comprenant une étape de mémorisation d'une information représentative de zones élémentaires comprises dans l'espace physique, les zones élémentaires comprenant chacune au moins un noeud du deuxième réseau.
Avantageusement, l'étape de détermination de l'espace physique comprend en outre une étape de mémorisation d'une information représentative d'une localisation, d'au moins un noeud dans la zone élémentaire le comprenant.
Selon une autre caractéristique, le procédé comprend une étape de réception de la au moins une partie du bilan de liaison du deuxième réseau.
Avantageusement, le procédé comprend une étape de détermination de la au moins une partie du bilan de liaison du deuxième réseau.
Selon une caractéristique spécifique, le paramètre est choisi parmi :

-    au moins un paramètre spatial ;
-    au moins un paramètre de couche physique ;
-    au moins un paramètre de couche supérieure à la couche physique ;

ou une combinaison quelconque de ces paramètres.

Selon une autre caractéristique, l'étape de configuration comprend une étape de détermination d'un bilan de liaison du premier réseau en fonction du bilan de liaison du deuxième réseau.

Avantageusement, le bilan de liaison du deuxième réseau est fonction de mesures de puissance reçue d'un signal émis par au moins un noeud et reçu par au moins un autre noeud du deuxième réseau, les mesures étant réalisées pour au moins deux fréquences de canal d'émission différentes du signal, les au moins deux fréquences de canal d'émission appartenant à une même bande de fréquences.

Selon une caractéristique particulière, le deuxième réseau est un réseau maillé.

Selon une caractéristique spécifique, le premier réseau utilise une première bande de fréquences et le deuxième réseau utilise une deuxième bande de fréquences différente de la première bande de fréquences.

Avantageusement, la différence entre la première bande de fréquences et la deuxième bande de fréquence est inférieure à deux octaves.

Selon une autre caractéristique, la densité de répartition des noeuds du deuxième réseau dans l'espace physique est supérieure à la densité de répartition de noeuds du premier réseau dans l'espace physique.

Avantageusement, le procédé comprend une étape de requête pour obtenir la au moins une partie du bilan de liaison du deuxième réseau,

## 4. Liste des figures.

L'invention sera mieux comprise, et d'autres particularités et avantages apparaîtront à la lecture de la description qui va suivre, la description faisant référence aux dessins annexés parmi lesquels :

- la figure 1 illustre un système sans fil mettant en oeuvre deux réseaux sans fil, selon un mode de réalisation particulier de l'invention ;
- les figures 2 et 3 illustrent schématiquement respectivement un point d'accès d'un premier réseau et un noeud d'un deuxième réseau du système de la figure 1, selon un mode de réalisation particulier de l'invention ;
- les figures 4 et 5 illustrent un procédé de configuration d'un premier réseau sans fil du système de la figure 1, selon des modes particuliers de réalisation de l'invention.

## 5. Description détaillée de modes de réalisation de l'invention.

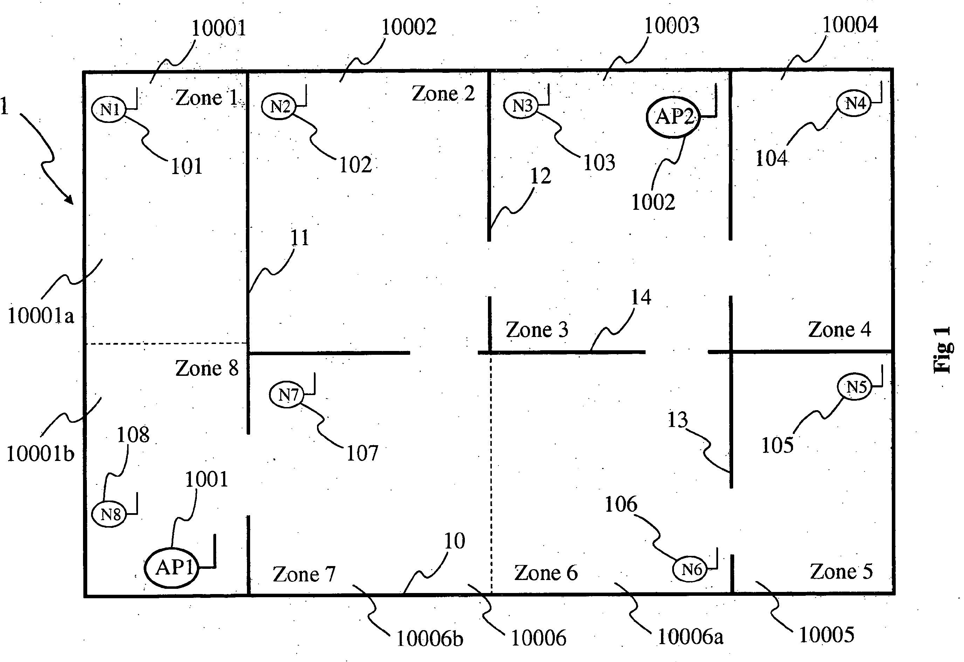

La **figure 1** illustre un système 1 de communication sans fil mettant en oeuvre deux réseaux sans fil. Un premier réseau comprend deux points d'accès AP1 1001 et AP2 1002 couvrant en émission un espace correspondant par exemple à un étage d'un immeuble ou à une maison et délimité par une paroi extérieure 10, c'est-à-dire couvrant l'ensemble des pièces 10001 à 10006. Le point d'accès AP1 1001 est localisé dans une zone 8 10001b d'une pièce 10001 et le point d'accès AP2 1002 est localisé dans une zone 3 correspondant à une pièce 10003. Un deuxième réseau comprend 8 noeuds 101, 102, 103, 104, 105; 106, 107 et 108 répartis dans un espace correspondant par exemple à un étage d'un immeuble ou à une maison. Cet espace est entouré par une cloison 10 qui le ceint et comprend des pièces 10001, 10002, 10003, 10004, 10005 et 10006 délimitées par des parois 11, 12, 13 et 14 comprenant chacune une ou deux ouverture pour permettre la circulation de personnes d'une pièce à une autre. Les pièces 10002, 10003, 10004 et 10005 comprennent chacune un noeud, respectivement référencé 102, 103, 104 et 105. Les pièces 10001 et 10006 de tailles plus importantes que les autres pièces comprennent chacune deux noeuds, respectivement référencés 101, 108 et 106, 107. Chacune de pièces contenant un unique noeud forme une zone (nommées zone 2, zone 3, zone 4 et zone 5) et chacune des pièces contenant deux noeuds forme deux zones, chacune des zones comprenant un unique noeud. Ainsi, la pièce 10001 comprenant les noeuds N1 101 et N8 108 forme deux zones délimitées par un trait en pointillés, respectivement zone 1 et zone 8 (respectivement référencées 10001a et 10001b) comprenant chacune un noeud, respectivement N1 101 et N8 108. La pièce 10006 comprenant les noeuds N6 106 et N7 107 forme deux zones délimitées par un trait en pointillées, respectivement zone 6 et zone 7 (respectivement référencées 10006a et 10006b) comprenant chacune un noeud, respectivement N6 106 et N7 107. Le réseau comprenant les noeuds N1 à N8, dénommé deuxième réseau dans le reste de la description, forme avantageusement un réseau maillé utilisant par exemple le protocole « Zigbee » basé sur la norme IEEE 802.15.4. Les noeuds N1 à N8 échange des données en utilisant une ou plusieurs fréquences de canal appartenant à la bande de fréquences 2,4 GHz. Le réseau comprenant les points d'accès AP1 et AP2, dénommé premier réseau dans le reste de la description, forme avantageusement un réseau Wi-Fi® et utilise une ou plusieurs fréquences de canal appartenant à la bande de fréquences 5 GHz. Le premier réseau sans fil est avantageusement physiquement différent du deuxième réseau sans fil. De manière générale, un réseau est caractérisé par les points d'accès ou les noeuds qui le composent, par l'utilisation d'une bande de fréquences, par le standard mis en oeuvre, par une période temporelle d'activité. Le premier et le deuxième réseaux sont différents par exemple en ce que les points d'accès (ou les noeuds) qui les composent sont distincts et/ou en ce qu'ils utilisent des bandes de fréquences différentes et/ou en qu'ils mettent en oeuvre des standards différents (par exemple respectivement Wi-Fi® et Zigbee) et/ou ce que les périodes d'activités (c'est-à-dire d'émission/réception de données) sont différentes d'un réseau à l'autre. Selon une variante, les points d'accès AP1, AP2 du premier réseau sont différents des noeuds 101 à 108 du deuxième réseau d'un point de vue matériel (de l'anglais « hardware »). Selon une variante, les points d'accès AP1, AP2 sont différents des noeuds 101 à 108 d'un point de vue logiciel (de l'anglais « software »).

Selon une variante, le deuxième réseau forme un réseau Wi-Fi utilisant par exemple une ou plusieurs fréquences de canal appartenant à la bande de fréquences 2,4 GHz. Le premier réseau et le deuxième réseau utilisent avantageusement des bandes de fréquences différentes, par exemple 5 GHz pour le premier réseau et 2,4 GHz pour le deuxième réseau ou inversement. L'écart entre la bande de fréquence utilisée par le premier réseau et celle utilisée par le deuxième réseau est inférieure à par exemple 2 octaves, avantageusement inférieure à 1 octave ou inférieure à 0,5 octave.

Selon une autre variante, le deuxième réseau forme un réseau maillé utilisant le protocole « Bluetooth » basé sur la norme IEEE 802.15.1 utilisant une ou plusieurs fréquences appartenant à la bande de fréquences 2,4 GHz.

Selon une variante additionnelle, le premier réseau sans fil utilise un premier canal physique et le deuxième réseau sans fil utilise un deuxième canal physique différent du premier canal physique. De manière générale, un canal physique est caractérisé par une bande de fréquences porteuses, une largeur de bande de fréquence et un schéma d'allocation d'intervalle de temps (de l'anglais « time slot allocation »). Dans le cas particulier d'un accès CDMA (de l'anglais « Code Division Multiple Access » ou « Accès multiple par Répartition par Code»), un canal physique est en outre caractérisé par un code d'étalement.

De manière avantageuse, les noeuds 101 à 108 et les points d'accès 1001, 1002 du système 1 sont des appareils fixes. L'un au moins des noeuds 101 à 108 forme un système couvrant une « pico-cellule » (de l'anglais « picocell ») c'est-à-dire une petite zone, comme l'intérieur d'un immeuble ou d'un supermarché, c'est-à-dire ayant une portée de quelques dizaines de mètres (par exemple inférieure à 50m). L'un au moins des points d'accès 1001, 1002 forme également un système couvrant une « pico-cellule ». Selon une autre variante, l'un au moins des noeuds 101 à 108 forme un système conçu pour couvrir une « femto-cellule » (dé l'anglais « femtocell ») c'est-à-dire une zone restreinte de plus petite taille qu'une pico-cellule, comme quelques pièces d'une maison ou d'un immeuble, un étage d'un immeuble, un avion, c'est-à-dire ayant une portée de quelques mètres (par exemple inférieure à 10m). L'un au moins des points d'accès 1001, 1002 forme également un système couvrant une « femto-cettute ».

Selon une variante, tous les noeuds 101 à 108 sont de type SISO (de l'anglais « Single Input Single Output » ou «entrée unique sortie unique » en français) et ne possèdent qu'une seule antenne. De la même manière, tous les points d'accès 1001, 1002 sont de type SISO.

Selon une autre variante, tous les noeuds 101 à 108 sont de type MIMO et possèdent plusieurs antennes transmettant un signal MIMO. De la même manière, tous les points d'accès 1001, 1002 sont de type MIMO.

Selon une autre variante, certains noeuds 101 à 108 (respectivement certains points d'accès 1001,1002) du système sont du type MIMO et les autres sont du type SISO.

De manière avantageuse, la densité de répartition des noeuds du deuxième réseau dans l'espace physique (c'est-à-dire le nombre de noeuds répartis dans l'espace physique) est supérieure à la densité de répartition des points d'accès du premier réseau (c'est-à-dire le nombre de points d'accès répartis dans l'espace physique), par exemple la densité des noeuds du deuxième réseau est 2, 3, 4 ou 5 fois supérieure à la densité des points d'accès du premier réseau.

Avantageusement, les points d'accès 1001, 1002 sont reliés entre eux par une liaison filaire; par exemple du type MoCA (de l'anglais « Multimedia over Coax Alliance » ou en français « Alliance multimédia sur coax »), Ethernet, PLC (de l'anglais « Powerline Communication » ou en français CPL « Courants Porteurs en Ligne »), POF (de l'anglais « Plastic Optical Fiber » ou en français « Fibre optique plastique ») ou encore ITU G.hn (correspondant au standard pour les technologies de réseaux domestiques de prochaine génération de ITU, de l'anglais international Telecommunication Union » ou en français « Union internationale des télécommunications »).

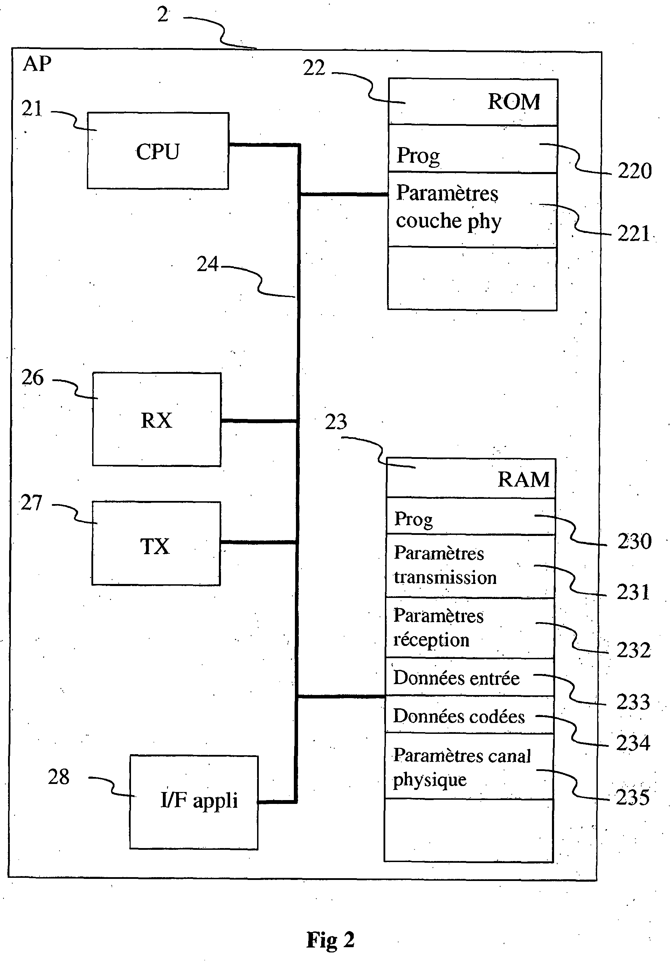

La **figure 2** illustre schématiquement un exemple de réalisation matérielle d'un point d'accès 2 correspondant par exemple aux points d'accès 1001, 1002 de la figure 1.

Le point d'accès 2 comprend les éléments suivants, reliés entre eux par un bus 24 d'adresses et de données qui transporte également un signal d'horloge :

- un microprocesseur 21 (ou CPU (de l'anglais « Central Processing Unit » ou en français « Unité centrale de traitement ») ;
- une mémoire non volatile de type ROM (de l'anglais « Read Only Memory ») 22 ;
- une mémoire vive ou RAM (de l'anglais « Random Access Memory ») 23 ;
- une interface radio 26 ;
- une interface 27 adaptée à la transmission de données (par exemple diffusion de services ou transmission point à multipoint ou point à point) et réalisant notamment les fonctions d'un codeur et/ou de modulateurs OFDM ;
- une interface MMI (ou interface homme/machine de l'anglais « Man Machine Interface ») 28 ou une application spécifique adaptée à l'affichage d'informations pour un utilisateur et/ou l'entrée de données ou de paramètres (par exemple le paramétrage des sous-porteuses et des données à transmettre).

On observe que le mot « registre » utilisé dans la description des mémoires 22 et 23 désigne dans chacune des mémoires mentionnées, aussi bien une zone de mémoire de faible capacité (quelques données binaires) qu'une zone mémoire de grande capacité (permettant de stocker un programme entier ou tout ou partie des données représentatives de données reçues ou à diffuser).
La mémoire ROM 22 comprend notamment :

- un programme « prog » 220 ; et
- des paramètres 221 de couches physiques.

Les algorithmes mettant en oeuvre les étapes du procédé propre à l'invention et décrits ci-après sont stockés dans la mémoire ROM 22 associée au point d'accès 2 mettant en oeuvre ces étapes. A la mise sous tension, le microprocesseur 21 charge et exécute les instructions de ces algorithmes.
La mémoire vive 23 comprend notamment :

- dans un registre 230, le programme de fonctionnement du microprocesseur 21 chargé à la mise sous tension du point d'accès 2 ;
- des paramètres de transmission 231 (par exemple paramètres de modulation, de codage, MIMO, de récurrence des trames) ;
- des paramètres de réception 232 (par exemple paramètres de modulation, de codage, MIMO, de récurrence des trames) ;
- des données entrantes 233 ;
- des données codées 234 pour la transmission des données ; et
- des paramètres de canal physique 235 (par exemple allocation d'une fréquence déterminée, d'une largeur de bande de fréquence déterminée, d'intervalles temporel déterminés, d'un code déterminé et/ou d'intervalles de sous-porteuses déterminés à l'émission des données par le point d'accès 2).

L'interface radio 26 est adaptée à la réception des signaux émis le cas échéant par un ou plusieurs terminaux mobiles du système 1 non représentés sur la figure 1.

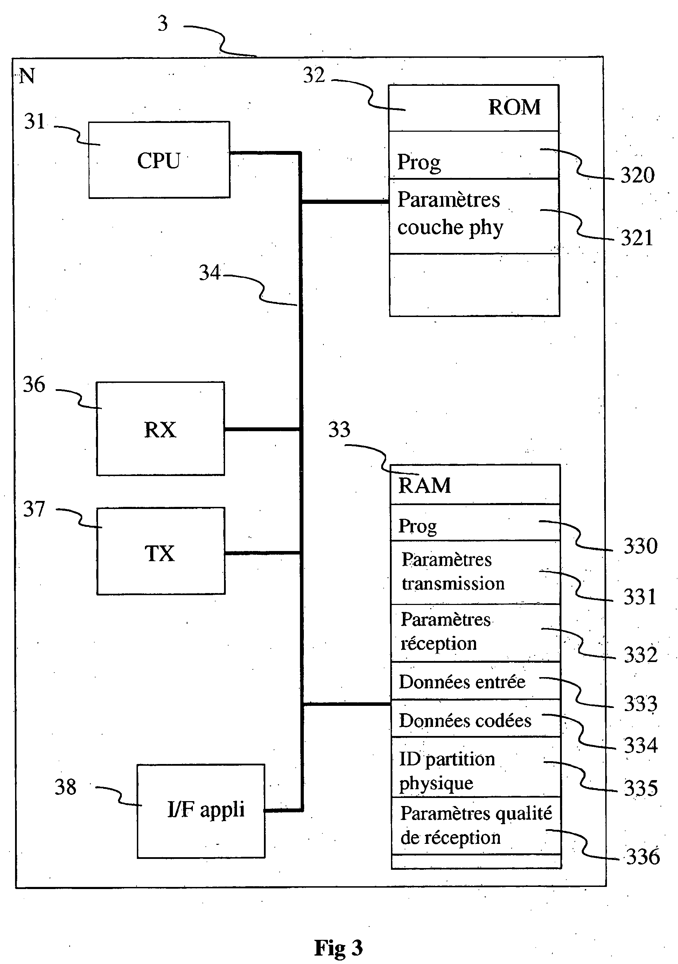

La **figure 3** illustre schématiquement un exemple de réalisation matérielle d'un noeud 3 correspondant par exemple aux noeuds 101 à 108 de la figure 1.
Le noeud 3 comprend les éléments suivants, reliés entre eux par un bus 34 d'adresses et de données qui transporte également un signal d'horloge :

- un microprocesseur 31 (ou CPU (de l'anglais « Central Processing Unit » ou en français « Unité centrale de traitement ») ;
- une mémoire non volatile de type ROM (de l'anglais « Read Only Memory ») 32 ;
- une mémoire vive ou RAM (de l'anglais « Random Access Memory ») 33 ;
- une interface radio 36 ;
- une interface 37 adaptée à la transmission de données (par exemple diffusion de services ou transmission point à multipoint ou point à point) et réalisant notamment les fonctions d'un codeur ;
- une interface MMI (ou interface homme/machine de l'anglais « Man Machine Interface ») 28 ou une application spécifique adaptée à l'affichage d'informations pour un utilisateur et/ou l'entrée de données ou de paramètres.

On observe que le mot « registre » utilisé dans la description des mémoires 32 et 33 désigne dans chacune des mémoires mentionnées, aussi bien une zone de mémoire de faible capacité (quelques données binaires) qu'une zone mémoire de grande capacité (permettant de stocker un programme entier ou tout ou partie des données représentatives de données reçues ou à diffuser).
La mémoire ROM 32 comprend notamment :

- un programme « prog » 320 ; et
- des paramètres 321 de couches physiques.

Les algorithmes mettant en oeuvre les étapes du procédé propre à l'invention et décrits ci-après sont stockés dans la mémoire ROM 32 associée au noeud 3 mettant en oeuvre ces étapes. A la mise sous tension, le microprocesseur 31 charge et exécute les instructions de ces algorithmes.
La mémoire vive 33 comprend notamment :

- dans un registre 330, le programme de fonctionnement du microprocesseur 31 chargé à la mise sous tension du noeud 3 ;
- des paramètres de transmission 331 (par exemple paramètres de modulation, de codage, MIMO, de récurrence des trames) ;
- des paramètres de réception 332 (par exemple paramètres de modulation, de codage, MIMO, de récurrence des trames) ;
- des données entrantes 333 ;
- des données codées 334 pour la transmission des données ;
- des données 335 représentatives d'un identifiant de partition physique, chaque partition physique correspondant à une zone 1 à 8 contenant un noeud telle qu'illustrée sur la figure 1 ; et
- des paramètres .de qualité de réception 336 d'un signal émis par un autre noeud (par exemple le niveau de puissance du signal reçu, le ratio signal sur bruit SNR (de l'anglais « Signal to Noise Ratio »).

L'interface radio 36 est adaptée à la réception des signaux émis le cas échéant par un ou plusieurs autres noeuds 101 à 108 du système 1.

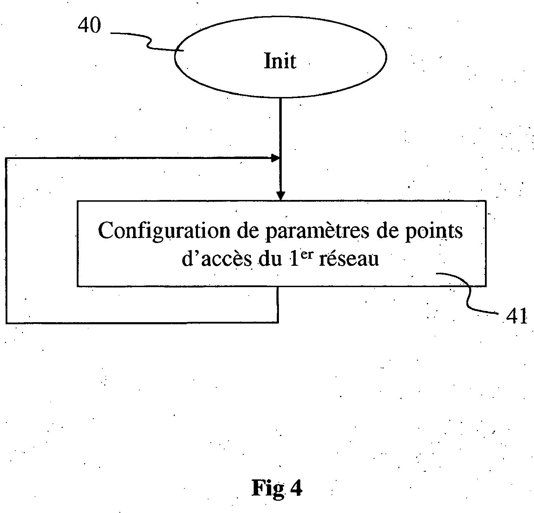

La **figure 4** illustre un procédé de configuration d'un réseau sans fil du système 1, selon un exemple de mise en oeuvre non limitatif particulièrement avantageux de l'invention.

Au cours d'une étape d'initialisation 40, les différents paramètres des noeuds 101 à 108 sont mis à jour. En particulier, les paramètres correspondant aux signaux à émettre et aux sous-porteuses correspondantes le cas échéant sont initialisés d'une manière quelconque (par exemple suite à la réception de messages d'initialisation émis par un serveur non représenté du système 1, ou encore par des commandes d'un opérateur).

Ensuite, au cours d'une étape 41, un ou plusieurs paramètres d'au moins un point d'accès du premier réseau, par exemple un réseau Wi-Fi utilisant la bande de fréquence 5 GHz, est configuré. Les paramètres à configurer appartiennent à un groupe comprenant :

- un paramètre spatial, c'est-à-dire par exemple la localisation du point d'accès dans l'espace physique et/ou dans une partition physique, un nombre de points d'accès à installer pour couvrir l'espace physique, une direction d'une ou plusieurs antennes ;
- un paramètre de couche physique, c'est-à-dire par exemple une fréquence de canal d'émission, une largeur de canal d'émission, une puissance d'émission ; et
- un paramètre de couche supérieure à la couche physique selon le modèle OSI (de l'anglais « Open Systems Interconnection » ou en français « Interconnexion de systèmes ouverts »), c'est-à-dire par exemple un intervalle temporel alloué pour l'émission d'un signal en TDMA (de l'anglais « Time Division Multiple Access » ou « Accès multiple à répartition dans le temps »), un code d'étalement en CDMA (de l'anglais « Code Division Multiple Access » ou en français « Accès multiple par répartition en code »), un protocole de communication.

Selon une variante, le groupe de paramètres ne comprend qu'un seul ou deux ou trois des paramètres listés ci-dessus. Selon une autre variante, le paramètre à configurer est combinaison d'au moins deux des paramètres du groupe de paramètres définis ci-dessus, par exemple une combinaison associant un paramètre spatial à un paramètre de couche physique.

Le choix du ou des paramètres à appliquer aux points d'accès du premier réseau est déterminé à partir du bilan de liaison établi pour le deuxième réseau. Le bilan de liaison du deuxième réseau traduit la qualité de la liaison entre un noeud du deuxième réseau et un autre noeud du deuxième réseau. Ainsi, le bilan de liaison global du deuxième réseau regroupe un ensemble de valeurs représentatives de la qualité de liaison pour chaque couple noeud émetteur/noeud récepteur et est représentée sous la forme d'une matrice NxN, où N est le nombre de noeuds du deuxième réseau. Ainsi chaque noeud émet un signal représentatif d'un identifiant du noeud émetteur du signal. Les noeuds recevant le signal émis estime avantageusement le RSSI (de l'anglais « Received Signal Strength Indicator » ou en français « Indicateur de puissance de signal reçu ») du signal reçu et décode le signal pour en extraire l'identifiant du noeud émetteur du signal. Une information représentative de l'identifiant du noeud émetteur associé au RSSI estimé est stocké dans chaque noeud ayant estimé le RSSI et cette information est transmise à un contrôleur du deuxième réseau centralisant tous les couples identifiant d'émetteur/RSSI estimé signal reçu. Le RSSI estimé pour chaque couple noeud émetteur/noeud récepteur est un indicateur de la qualité de la liaison pour chaque couple noeud émetteur/noeud récepteur.

Selon une variante, un autre indicateur représentatif de la qualité de la liaison entre un noeud émetteur et un noeud récepteur est le taux d'erreur binaire BER (de l'anglais « Bit Error Rate ») ou du taux d'erreur de trame FER (de l'anglais « Frame Error Rate »). De la même manière que pour le RSSI, le BER ou le FER est estimé à partir d'un signal reçu par un noeud, le signal étant émis par un autre noeud du deuxième réseau, selon toute méthode connue de l'homme du métier. Chaque noeud du deuxième réseau émet un signal représentatif de son identifiant et les noeuds recevant ce signal estime le BER ou le FER. Un contrôleur centralise ces informations et établit une matrice représentative du bilan de liaison du deuxième réseau.

Chaque zone de l'espace physique à couvrir par les points d'accès du premier réseau contenant un unique noeud du deuxième réseau, le bilan de liaison déterminé entre un noeud i et un noeud j du deuxième réseau correspond au bilan de liaison déterminé entre une zone i et une zone j de l'espace physique.

Le bilan de liaison du deuxième réseau est traduit en bilan de liaison du premier réseau, selon toute méthode connue de l'homme du métier, par exemple par calcul ou à partir de tables ou modèles déterminés de manière empirique, en fonction des paramètres représentatifs des noeuds du deuxième réseau et des points d'accès du premier réseau. Des paramètres représentatifs sont par exemple le ou les gains d'antenne, la puissance d'émission, la fréquence de canal... Le choix du ou des paramètres à configurer pour l'un au moins des points d'accès du premier réseau est réalisé avantageusement à l'aide d'un algorithme d'essais et d'erreurs permettant d'aboutir aux paramètres des points d'accès optimaux pour couvrir au mieux l'espace physique à couvrir en limitant par exemple les interférences entre les points d'accès et à l'extérieur de l'espace physique.

Selon une variante, seule une partie du bilan de liaison correspondant à une partie des noeuds du deuxième réseau est déterminée.

L'espace physique à couvrir est avantageusement déterminé par un utilisateur du premier réseau.

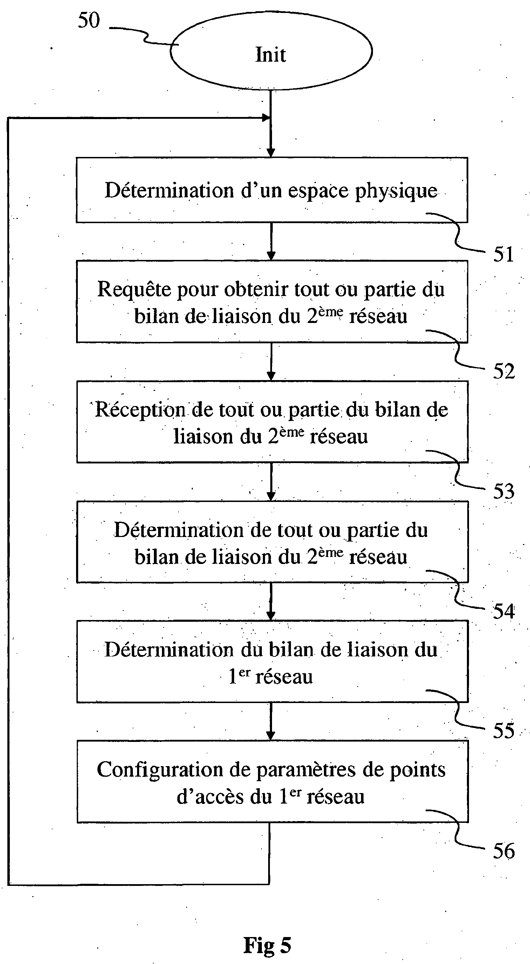

La **figure 5** illustre un procédé de configuration d'un réseau sans fil du système 1, selon un exemple de mise en oeuvre non limitatif particulièrement avantageux de l'invention.

Au cours d'une étape d'initialisation 50, les différents paramètres des noeuds 101 à 108 sont mis à jour. En particulier, les paramètres correspondant aux signaux à émettre et aux le cas échéant sous-porteuses correspondantes sont initialisés d'une manière quelconque (par exemple suite à la réception de messages d'initialisation émis par un serveur non représenté du système 1, ou encore par des commandes d'un opérateur).

Ensuite, au cours d'une étape 51, un espace physique correspondant à la zone de couverture attendue des points d'accès du premier réseau, par exemple un réseau Wi-Fi, est déterminé. La zone de couverture attendue correspond à l'espace qu'un utilisateur du réseau sans fil souhaite voir couvert par les points d'accès, par exemple l'étage d'un immeuble ou une maison. La définition de l'espace physique est avantageusement réalisée en plusieurs étapes. Premièrement, l'espace physique est partagé en une ou plusieurs partitions physiques. La partition de l'espace répond à plusieurs contraintes. Chaque partition contient un noeud d'un deuxième réseau, par exemple un réseau maillé de type « Zigbee ». Par ailleurs, les obstacles physiques ayant une incidence sur la propagation des signaux émis par les noeuds du deuxième réseau sont pris en compte pour la définition des partitions physiques : par exemple parois internes, murs extérieurs, plafond, sol, etc. Concernant les pièces d'un immeuble ou d'une maison, une pièce aux dimensions réduites (par exemple 5 m sur 5 m) contenant un noeud du deuxième réseau définit une partition physique. Une pièce de dimensions plus importantes (par exemple 10 m sur 10 m) contenant plusieurs noeuds du deuxième réseau contient alors autant de partitions physiques qu'il y a de noeuds. Si la zone de couverture des points d'accès du premier réseau doit s'étendre à l'extérieur d'un espace interne défini par une cloison ou mur extérieur, l'espace extérieur que l'utilisateur du premier réseau souhaite voir couvert par les points d'accès du premier réseau est également partitionné en partitions physiques contenant chacune un noeud du deuxième réseau. Les obstacles physiques ayant une incidence sur la propagation des signaux émis par les noeuds du deuxième réseau sont également avantageusement pris en compte pour la définition des partitions physiques extérieures. Une fois les partitions physiques de l'espace physique définies, un identifiant (par exemple un numéro croissant) est assigné à chacune des partitions physiques. De manière avantageuse, la position géographique du noeud dans chacune des partitions physiques est précisée dans un mode plan de l'espace physique, c'est-à-dire selon deux axes x et y, x représentant par exemple la longueur de l'espace physique et y sa largeur. Selon une variante, la position du noeud dans l'espace physique prend en compte la composante suivant un axe z représentée par la hauteur de la partition physique, l'espace physique étant alors représenté en mode tridimensionnel. Selon une variante, la position du noeud dans une partition physique est définie à partir de critères approximatifs, par exemple coin supérieur droit ou gauche, coin inférieur droit ou gauche, centre de la partition, milieu de la paroi supérieure ou inférieure, milieu de la paroi droite ou gauche en mode plan et près du sol, près du plafond, à mi-hauteur en mode tridimensionnel intégrant la composante z. Selon une autre variante, la position du noeud dans une partition physique est définie de manière précise avec les coordonnées exactes du noeud dans la partition.

De manière avantageuse, tout ou partie des informations représentatives de la définition de l'espace physique, c'est-à-dire les informations relatives aux partitions de l'espace physique et/ou les informations relatives à la position géographique d'un noeud dans une partition, sont enregistrées dans une mémoire d'un dispositif de gestion du deuxième réseau. Selon une variante, les informations représentatives de la définition de l'espace physique sont enregistrées dans une mémoire d'un dispositif de gestion du premier réseau ou directement dans un des points d'accès du premier réseau, par exemple un point d'accès maitre.

Puis au cours d'une étape 52, une requête pour obtenir une partie ou l'intégralité du bilan de liaison du deuxième réseau, par exemple un réseau maillé de type « Zigbee », est reçue par un élément du deuxième réseau, par exemple un contrôleur du deuxième réseau ou un ou plusieurs noeuds du deuxième réseau. Avantageusement, cette requête est émise par un élément du premier réseau, par exemple un contrôleur ou un point d'accès du premier réseau. Selon une variante, cette requête est émise par une personne en charge de la mise en oeuvre ou de la gestion du premier réseau. Selon une autre variante, cette requête est émise par un contrôleur du deuxième réseau à destination d'un ou plusieurs noeuds du deuxième réseau. La requête pour obtenir tout ou partie du bilan de liaison du deuxième réseau est émise de manière avantageuse avant l'installation et le paramétrage des points d'accès du premier réseau dans l'espace physique. Selon une variante, la requête est émise à intervalles réguliers, par exemple tous les jours ou toutes les heures. Selon une autre variante, la requête est émise après toute modification d'un ou plusieurs paramètres de noeuds du deuxième réseau, par exemple ajout ou suppression d'un ou plusieurs noeuds, modification de la fréquence de canal d'émission d'au moins un des noeuds, déplacement d'un ou plusieurs noeuds modifiant la définition de l'espace physique, etc.

Puis au cours d'une étape 53, une partie du bilan de liaison du deuxième réseau ou l'intégralité du bilan de liaison du deuxième réseau est reçue par un contrôleur du deuxième réseau. De manière avantageuse, tout ou partie du bilan de liaison du deuxième réseau est reçu par une dispositif appartenant au premier réseau, par exemple un contrôleur ou un point d'accès. Selon une variante, le bilan de liaison est reçu par un des noeuds du deuxième réseau, par exemple un noeud maître.

Au cours d'une étape 54, une partie ou l'ensemble du bilan de liaison du deuxième réseau est déterminé. Pour ce faire, le contrôleur du deuxième réseau, connecté au deuxième réseau par liaison filaire ou sans fil, initialise les paramètres du deuxième réseau, par exemple la fréquence de canal du deuxième réseau. Chaque noeud composant le deuxième réseau émet alors son propre pilote à destination de l'ensemble des autres noeuds composant le deuxième réseau, le pilote de chaque noeud comprenant un identifiant de noeud. Chaque noeud recevant le pilote ainsi émis décode le pilote et enregistre l'identifiant compris dans le pilote reçu dans une mémoire ou dans une table. Pour chaque pilote reçu, le noeud estime le RSSI (de l'anglais « Received Signal Strength Indicator » ou en français « Indicateur de puissance de signal reçu ») du signal reçu contenant le pilote considéré et l'enregistre dans une mémoire ou dans une table en faisant le lien avec l'identifiant du noeud émetteur du signal dont la puissance reçue RSSI a été estimée. Ainsi, chaque noeud du deuxième réseau stocke pour chaque signal reçu contenant un pilote émis par un autre noeud l'identifiant du noeud émetteur du pilote et stocke en regard de l'information représentative de l'identifiant du pilote la valeur estimée de RSSI du signal reçu contenant le pilote en question. Une fois les mesures de RSSI effectuées par tous les noeuds, chaque noeud émet à destination du contrôleur les valeurs de RSSI mesurées associées aux identifiants des noeuds émetteur, ainsi que l'identifiant du noeud ayant effectué ces mesures. Le contrôleur centralise ainsi toutes les mesures de RSSI effectuées par l'ensemble des noeuds du deuxième réseau associées aux identifiants des couples noeuds émetteurs / noeuds récepteur. Une matrice contenant les valeurs de RSSI estimées est alors obtenue, matrice NxN où N est le nombre de noeuds, ou matrice 8 x 8 dans le système de la figure 1 où le deuxième réseau comprend 8 noeuds. On obtient donc la matrice suivante pour un réseau comprenant N noeuds :

$$
\begin{pmatrix}
 & N_1 & N_2 & N_3 & ... & N_N \\
N_1 & \square & P_{21} & P_{31} & ... & P_{N1} \\
N_2 & P_{12} & \square & P_{32} & ... & P_{N2} \\
N_3 & P_{13} & P_{23} & \square & ... & P_{N3} \\
... & ... & ... & ... & ... & ... \\
N_N & P_{1N} & P_{2N} & P_{3N} & ... & \square
\end{pmatrix}
\qquad \text{Matrice (1) NxN}
$$

Ainsi, la matrice (1) NxN contient les valeurs mesurées de RSSI pour chaque couple noeud émetteur / noeud récepteur du deuxième réseau. $P_{21}$ est le RSSI mesuré par le noeud $N_2$ d'un signal émis par le noeud $N_1$, $P_{31}$ est le RSSI mesuré par le noeud $N_3$ d'un signal émis par le noeud $N_1$, $P_{12}$ est le RSSI mesuré par le noeud $N_1$ d'un signal émis par le noeud $N_2$ et ainsi de suite. Dans le cas où le pilote émis par un noeud j n'a pas été reçu ou compris par un noeud i, la valeur du RSSI correspondant est non déterminée.

Dans le système de la figure 1 où le deuxième réseau comprend 8 noeuds, on obtient la matrice suivante :

$$\begin{pmatrix}
 & N_1 & N_2 & N_3 & N_4 & N_5 & N_6 & N_7 & N_8 \\
N_1 & \square & P_{21} & P_{31} & P_{41} & P_{51} & P_{61} & P_{71} & P_{81} \\
N_2 & P_{12} & \square & P_{32} & P_{42} & P_{52} & P_{62} & P_{72} & P_{82} \\
N_3 & P_{13} & P_{23} & \square & P_{43} & P_{53} & P_{63} & P_{73} & P_{83} \\
N_4 & P_{14} & P_{24} & P_{33} & \square & P_{54} & P_{64} & P_{74} & P_{84} \\
N_5 & P_{15} & P_{25} & P_{34} & P_{45} & \square & P_{65} & P_{75} & P_{85} \\
N_6 & P_{16} & P_{26} & P_{35} & P_{46} & P_{56} & \square & P_{76} & P_{86} \\
N_7 & P_{17} & P_{27} & P_{36} & P_{47} & P_{57} & P_{67} & \square & P_{87} \\
N_8 & P_{18} & P_{28} & P_{37} & P_{48} & P_{58} & P_{68} & P_{78} & \square
\end{pmatrix} \qquad \text{Matrice (2) 8x8}$$

Comme chaque partition physique de l'espace physique contient un unique noeud, le numéro du noeud $N_1$ à $N_N$ correspond également au numéro ou à l'identifiant de la partition physique.

A partir de la matrice comprenant les valeurs estimées de RSSI pour chaque couple noeud émetteur / noeud récepteur, il est possible d'en déduire la matrice du bilan de liaison en appliquant à chaque élément de la matrice le calcul suivant :

$$L_{ij}=P_{ij} - \text{GainAntenne(i)} - \text{GainAntenne(j)} - \text{PuissanceEmise(j)} - C_{ij}$$

$$\text{(Equation 1)}$$

où $L_{ij}$ correspond à la valeur en dB du bilan de liaison entre les partitions i et j, $P_{ij}$ correspond au RSSI (signal émis par j et reçu par i), GainAntenne(i) correspond à la différence de gain de l'antenne du noeud récepteur par rapport à antenne omnidirectionnelle (ou partitions réceptrice) i, GainAntenne(j) correspond à la différence de gain de l'antenne du noeud émetteur j par rapport à antenne omnidirectionnelle (ou partition émettrice), PuissanceEmise(j) correspond à la puissance d'émission du noeud émetteur j (ou partition émettrice) et $C_{ij}$ est une constante. $C_{ij}$ est par défaut nul ; sinon C, qui dépend de la précision de la position géographique des noeuds i et j dans leur partitions physiques respectives, prend une valeur non nulle qui est déterminée par calcul théorique ou par l'expérience.

Dans le cas où le pilote émis par un noeud j n'a pas été reçu ou compris par un noeud i, c'est-à-dire lorsque la valeur du RSSI correspondant est non déterminée, la valeur du bilan de liaison entre les noeuds i et j est infinie.

On obtient alors la matrice du bilan de liaison suivante :

$$\begin{pmatrix}
 & N_1 & N_2 & N_3 & N_4 & N_5 & N_6 & N_7 & N_8 \\
N_1 & \square & L_{21} & L_{31} & L_{41} & L_{51} & L_{61} & L_{71} & L_{81} \\
N_2 & L_{12} & \square & L_{32} & L_{42} & L_{52} & L_{62} & L_{72} & L_{82} \\
N_3 & L_{13} & L_{23} & \square & L_{43} & L_{53} & L_{63} & L_{73} & L_{83} \\
N_4 & L_{14} & L_{24} & L_{34} & \square & L_{54} & L_{64} & L_{74} & L_{84} \\
N_5 & L_{15} & L_{25} & L_{35} & L_{45} & \square & L_{65} & L_{75} & L_{85} \\
N_6 & L_{16} & L_{26} & L_{36} & L_{46} & L_{56} & \square & L_{76} & L_{86} \\
N_7 & L_{17} & L_{27} & L_{37} & L_{47} & L_{57} & L_{67} & \square & L_{87} \\
N_8 & L_{18} & L_{28} & L_{38} & L_{48} & L_{58} & L_{68} & L_{78} & \square
\end{pmatrix} \qquad \text{Matrice (3) 8x8}$$

De manière avantageuse, l'étape 54 reboucle sur elle-même et le contrôleur du deuxième réseau réinitialise le deuxième réseau en assignant une autre valeur pour la fréquence de canal utilisée par les noeuds du deuxième réseau. Le RSSI pour chaque couple noeud émetteur / noeud récepteur est alors estimée à nouveau et le bilan de liaison déterminée à nouveau sur la base de la nouvelle fréquence de canal utilisée. Cette opération est avantageusement réitérée pour plusieurs fréquences de canal. La matrice du bilan de liaison du deuxième réseau est alors déterminée en moyennant toutes les valeurs de bilan de liaison calculées pour les différentes fréquences de canal utilisées. Le résultat obtenu présente ainsi l'avantage d'être plus précis et moins dépendant de la diversité fréquentielle du canal de fréquence. Selon une variante, les fréquences de canal utilisées pour le calcul du bilan de liaison appartiennent à une même bande de fréquence, par exemple la bande de fréquence 2,4 GHz ou la bande de fréquence 5 GHz.

Selon une variante, le bilan de liaison du deuxième réseau est déterminé pour une partie seulement du deuxième réseau, c'est-à-dire pour une partie des noeuds du (ou des partitions couvertes par le) deuxième réseau. Le bilan de liaison est par exemple déterminé par les noeuds N1, N2, N7 et N8 seulement ou pour les noeuds N3, N4, N5 et N6 seulement.

Selon une autre variante, une partie du bilan de liaison est reçue comme décrit à l'étape 53 et une autre partie (ou la partie complémentaire) du bilan de liaison du deuxième réseau est déterminée comme décrit à l'étape 54.

Puis au cours d'une étape 55, le bilan de liaison du premier réseau, par exemple un réseau Wi-Fi, est déterminé. Pour ce faire, chaque élément de la matrice du bilan de liaison du deuxième réseau $L_{ij}$ est traduit en un élément $L'_{ij}$ représentatif du bilan de liaison entre les partitions i et j dans le premier réseau. Ainsi, à chaque élément $L_{ij}$ est appliquée la formule suivante pour obtenir $L'_{ij}$ :

$$L'_{ij} = L_{ij} + 20\log_{10}(F_2/F_1) + 10\log_{10}(LargeurCanal_2/LargeurCanal_1) - C$$
$$(\text{équation } 2)$$

où $L'_{ij}$ représente le bilan de liaison du premier réseau entre les partitions i et j exprimé en dB ; $L_{ij}$ représente le bilan de liaison du deuxième réseau entre les partitions i et j exprimé en dB ; $F_2$ est la fréquence utilisée par le deuxième réseau, par exemple 2,4 GHz ; $F_1$ est la fréquence utilisée par le premier réseau, par exemple 5 GHz ; $LargeurCanal_2$ est la largeur d'un canal dans le deuxième réseau, par exemple 200 kHz ; $LargeurCanal_1$ est la largeur d'un canal dans le premier réseau, par exemple 20 MHz ; C est une constante déterminée par le calcul théorique de différence d'absorption entre les deux fréquences $F_1$ et $F_2$ ou par l'expérience.

Dans le cas où $L_{ij}$ prend une valeur non déterminée, $L'_{ij}$ prend également une valeur non déterminée. On obtient ainsi la matrice représentative du bilan de liaison du premier réseau :

$$\begin{pmatrix} & N_1 & N_2 & N_3 & N_4 & N_5 & N_6 & N_7 & N_8 \\ N_1 & \square & L'_{21} & L'_{31} & L'_{41} & L'_{51} & L'_{61} & L'_{71} & L'_{81} \\ N_2 & L'_{12} & \square & L'_{32} & L'_{42} & L'_{52} & L'_{62} & L'_{72} & L'_{82} \\ N_3 & L'_{13} & L'_{23} & \square & L'_{43} & L'_{53} & L'_{63} & L'_{73} & L'_{83} \\ N_4 & L'_{14} & L'_{24} & L'_{34} & \square & L'_{54} & L'_{64} & L'_{74} & L'_{84} \\ N_5 & L'_{15} & L'_{25} & L'_{35} & L'_{45} & \square & L'_{65} & L'_{75} & L'_{85} \\ N_6 & L'_{16} & L'_{26} & L'_{36} & L'_{46} & L'_{56} & \square & L'_{76} & L'_{86} \\ N_7 & L'_{17} & L'_{27} & L'_{37} & L'_{47} & L'_{57} & L'_{67} & \square & L'_{87} \\ N_8 & L'_{18} & L'_{28} & L'_{38} & L'_{48} & L'_{58} & L'_{68} & L'_{78} & \square \end{pmatrix} \quad \text{Matrice (4) 8x8}$$

Selon une variante, le bilan de liaison du premier réseau est déterminé par conversion de la matrice du bilan de liaison du deuxième réseau à partir de tables de conversion déterminées de manière empirique.

De manière avantageuse, la matrice de bilan de liaison du premier réseau est convertie en matrice de signal reçu du premier réseau par addition à chaque élément de la matrice du bilan de liaison de la puissance d'émission (exprimée en dB) de noeuds constituant le premier réseau et des différence de gains d'antenne émission et réception par rapport à une antenne omnidirectionnelle.

Selon une variante, une marge d'erreur déterminée de manière empirique ou par calcul théorique selon toute méthode connue de l'homme du métier est ajoutée à chaque élément de la matrice du bilan de liaison du premier réseau, par exemple égale à 10 dB plus ou moins 5 dB. L'ajout d'une telle marge d'erreur permet de prendre en compte les défauts d'échantillonnage spatial du deuxième réseau, les dispersions apparaissant dans une partition physique ainsi que l'erreur de traduction pour passer de la fréquence du deuxième réseau à la fréquence du premier réseau.

Selon une autre variante, la matrice du bilan de liaison du premier réseau est convertie en matrice creuse en retirant de chaque élément de la matrice de bilan de liaison une valeur seuil représentative d'un seuil dé sensibilité du premier réseau (par exemple -60 ou -80 dBm). Cette matrice creuse permet ainsi de faire apparaître des vides représentatifs des interconnexions impossibles entre deux partitions physiques ainsi que des marges de fonctionnement (ou marges de liaison) exprimées en dB. Les marges de fonctionnement du premier réseau sont d'autant plus positives que l'interconnexion entre deux partitions physiques est bonne. La valeur seuil représentative du seuil de sensibilité du premier réseau est avantageusement dépendante du type de modulation appliquée lors de l'émission de signaux par un point d'accès du premier réseau, par exemple modulation de sous-porteuse en QAM (de l'anglais « Quadrature Amplitude Modulation » ou en français « Modulation d'amplitude en quadrature »), BPSK (de l'anglais « Binary Phase-Shift Keying » ou en français « Modulation par déplacement de phase binaire »), QPSK (de l'anglais « Quadrature Phase-Shift Keying » ou en français « Modulation par déplacement de phase en quadrature »).

Selon une autre variante, la matrice du bilan de liaison du premier réseau est convertie en une matrice faisant apparaître le niveau d'interférences générées sur des zones de chevauchement de deux partitions physiques. Une telle matrice est obtenue en retirant de chaque élément de la matrice représentative du bilan de liaison du premier réseau une valeur seuil signal sur bruit ou signal sur interférent C/I, pour une valeur de puissance d'émission par défaut de chaque noeud du premier réseau. Les valeurs obtenues sont d'autant plus positives que les interférences apparaissant entre deux partitions physiques sont importantes. Une telle matrice offre l'avantage de situer rapidement entre quelles partitions les interférences seront les plus importantes, et donc où la connectivité sera moins bonne.

Avant de déterminer le bilan de liaison du premier réseau, les paramètres du deuxième réseau sont mémorisés, par exemple dans un contrôleur ou un noeud du deuxième réseau, ou dans un contrôleur ou un point d'accès du premier réseau. Les paramètres du deuxième réseau appartiennent à un groupe comprenant :

- une liste de fréquences utilisables par les noeuds du deuxième réseau ;
- une liste de noeuds du deuxième réseau disponibles pour établir une matrice de bilan de liaison du deuxième réseau ;
- la puissance d'émission utilisée pour chacun des noeuds pour calculer le bilan de liaison du deuxième réseau, la puissance d'émission maximale admissible étant avantageusement utilisée pour déterminer le bilan de liaison ;
- une valeur de gain d'antenne de chaque noeud du deuxième réseau, le gain d'antenne étant avantageusement identique pour chacun des noeuds ; et
- pour chaque noeud, un identifiant de partition physique associée au noeud, c'est-à-dire comprenant le noeud.

De la même manière, les paramètres généraux du premier réseau sont avantageusement connus et mémorisés avant de déterminer le bilan de liaison du premier réseau. Les paramètres généraux comprennent par exemple la fréquence de canal utilisée, la largeur de canal, la ou les puissances d'émission, le ou les gains d'antenne. Selon une variante, des spécificités de certains noeuds (par exemple points d'accès, stations mobiles du premier réseau) du premier réseau sont prises en compte pour la détermination du bilan de liaison du premier réseau, par exemple une puissance d'émission différente de celle utilisée par d'autres noeuds, localisation imposée d'un ou plusieurs noeuds.

Enfin, au cours d'une étape 56, un ou plusieurs des paramètres des points d'accès du premier réseau, par exemple un réseau Wi-Fi, sont configurés. Les paramètres à configurer appartiennent à un groupe comprenant :

- un paramètre spatial, c'est-à-dire par exemple la localisation du point d'accès dans l'espace physique et/ou dans une partition physique, un nombre de points d'accès à installer pour couvrir l'espace physique, une direction d'une ou plusieurs antennes ;
- un paramètre de couche physique, c'est-à-dire par exemple une fréquence de canal d'émission, une largeur de canal d'émission, une puissance d'émission; et
- un paramètre de couche supérieure à la couche physique selon le modèle OSI (de l'anglais « Open Systems Interconnection » ou en français « Interconnexion de systèmes ouverts »), c'est-à-dire par exemple un intervalle temporel alloué pour l'émission d'un signal en TDMA (de l'anglais « Time Division Multiple Access » ou « Accès multiple à répartition dans le temps »), un code d'étalement en CDMA (de l'anglais « Code Division Multiple Access » ou en français « Accès multiple par répartition en code »), un protocole de communication.

Selon une variante, le groupe de paramètres ne comprend qu'un seul ou deux ou trois des paramètres listés ci-dessus. Selon une autre variante, les premier et deuxième paramètres sont une combinaison d'au moins deux des paramètres du groupe de paramètres définis ci-dessus, par exemple une combinaison associant un paramètre spatial à un paramètre de couche physique.

Le choix du ou des paramètres à configurer pour l'un au moins des points d'accès du premier réseau est réalisé avantageusement à l'aide d'un algorithme d'essais et d'erreurs permettant d'aboutir aux paramètres des points d'accès optimaux pour couvrir au mieux l'espace physique à couvrir en limitant par exemple les interférences entre les points d'accès et à l'extérieur de l'espace physique. La couverture géographique d'émission que doit assurer un point d'accès est calculée par exemple à partir d'une matrice creuse déterminée à l'étape précédente. A partir d'une matrice faisant apparaître le niveau d'interférences, telle que déterminée à l'étape précédente, les interférences mutuelles apparaissant en chaque position d'un noeud (par exemple une station mobile) du premier réseau sont déterminées par rapport aux positions possibles des points d'accès du premier réseau. L'algorithme d'essais et d'erreurs permet ainsi de modéliser par combinaison de tous les paramètres notamment l'emplacement des points d'accès dans l'espace physique (par exemple indication de la partition physique dans laquelle doit se placer un point d'accès), le nombre de points d'accès nécessaires, la puissance d'émission minimale à appliquer à chaque point d'accès, la fréquence de canal d'émission à utiliser par chaque point d'accès...

Selon une variante, des paramètres prioritaires sont renseignés, par exemple puissance maximale d'émission des points d'accès, nombre de points d'accès, position du ou des points d'accès et les paramètres de configuration restants sont calculés en fonction de ces paramètres prioritaires imposés.

Bien entendu, l'invention ne se limite pas aux modes de réalisation décrits précédemment.

En particulier, l'invention n'est pas limitée à un premier réseau comprenant deux points d'accès et à un deuxième réseau comprenant huit noeuds mais s'étend à un système comprenant un premier réseau comprenant au moins un point d'accès et un deuxième réseau comprenant au moins deux noeuds.

Le premier réseau n'est pas limité à un réseau Wi-Fi utilisant une bande de fréquence 5 GHz mais s'étend à tout réseau sans fil de type WLAN, tel que par exemple HiperLAN2 ou Femto utilisant LTE (de l'anglais « Long Terme Evolution » ou en français « Evolution à long terme ») ou utilisant HSDPA (de l'anglais « High Speed Downlink Packet Access » ou en français « Accès haut débit aux paquets descendants»). De la même manière, le deuxième réseau n'est pas limité à un réseau maillé à noeuds légers de type « Zigbee » mais s'étend à tout réseau sans fil de type WLAN ou WPAN (de l'anglais « Wireless Personal Area Network » ou en français « Réseau personnel sans fil »), tel que par exemple un réseau Wi-Fi utilisant la bande de fréquence 2,4GHz (standards IEEE 802.11b ou IEEE 802.11g), un réseau de type Bluetooth (standard IEEE 802.15.1) ou un réseau ETSI HiperPAN.

Selon une variante, le bilan de liaison du deuxième réseau est déterminé à partir du taux d'erreur binaire BER (de l'anglais « Bit Error Rate ») ou du taux d'erreur de trame FER (de l'anglais « Frame Error Rate »). Ainsi, le BER ou le FER est estimé par un noeud recevant un signal émis par un autre noeud, le signal étant représentatif d'un identifiant du noeud émetteur du signal. Une matrice regroupant les valeurs estimées de BER ou FER pour chaque couple noeud émetteur/noeud récepteur est ainsi obtenue, permettant de définir une matrice représentative du bilan de liaison du deuxième réseau.

Selon une autre variante, chaque zone ou partition physique de l'espace physique contient plus d'un noeud du deuxième réseau, par exemple 2 ou 3 noeuds. La valeur du RSSI estimé entre deux partitions i et j comprenant plusieurs noeuds correspond à la moyenne des RSSI mesurés par exemple par les noeuds de la partition i recevant chacun un ou plusieurs signaux émis par chaque noeud de la partition j. Le bilan de liaison établi entre une partition i et une partition j correspond à la moyenne des bilans de liaison pour chaque couple possible noeud de la partition i / noeud de la partition j.

## Revendications

**1.** Procédé de configuration d'un premier réseau sans fil comprenant au moins un point d'accès, **caractérisé en ce qu'**il comprend une étape de configuration d'au moins un paramètre dudit au moins un point d'accès du premier réseau sans fil en fonction d'au moins une partie d'un bilan de liaison d'un deuxième réseau sans fil comprenant au moins deux noeuds, lesdits noeuds étant positionnés dans un espace physique déterminé, lesdits premier et deuxième réseaux sans fil étant physiquement différents, la densité de répartition des noeuds du deuxième réseau dans ledit espace physique étant supérieure à la densité de répartition de points d'accès du premier réseau dans ledit espace physique.

**2.** Procédé selon la revendication 1, **caractérisé en ce que** le premier réseau sans fil utilise un premier canal physique et le deuxième réseau sans fil utilise un deuxième canal physique, les premier et deuxième canaux physiques étant différents.

**3.** Procédé selon la revendication 1 ou 2, **caractérisé en ce qu'**il comprend une étape de détermination dudit espace physique comprenant une étape de mémorisation d'une information représentative de zones élémentaires comprises dans l'espace physique, lesdites zones élémentaires comprenant chacune au moins un noeud du deuxième réseau.

**4.** Procédé selon la revendication 3, **caractérisé en ce que** l'étape de détermination dudit espace physique comprend en outre une étape de mémorisation d'une information représentative d'une localisation d'au moins un noeud dans la zone élémentaire le comprenant.

**5.** Procédé selon l'une quelconque des revendications 1 à 4, **caractérisé en ce,qu'**il comprend une étape de réception de la au moins une partie du bilan de liaison du deuxième réseau.

**6.** Procédé selon l'une quelconque des revendications 1 à 5, **caractérisé en ce qu'**il comprend une étape de détermination de la au moins une partie du bilan de liaison du deuxième réseau.

7. Procédé selon l'une quelconque des revendications 1 à 6, **caractérisé en ce que** ledit paramètre est choisi parmi :

    - au moins un paramètre spatial ;
    - au moins un paramètre de couche physique ;
    - au moins un paramètre de couche supérieure à la couche physique ;

ou une combinaison quelconque de ces paramètres.

8. Procédé selon l'une quelconque des revendications 1 à 7, **caractérisé en ce que** l'étape de configuration comprend une étape de détermination d'un bilan de liaison du premier réseau en fonction du bilan de liaison du deuxième réseau.

9. Procédé selon l'une quelconque des revendications 1 à 8, **caractérisé en ce que** le bilan de liaison du deuxième réseau est fonction de mesures de puissance reçue d'un signal émis par au moins un noeud et reçu par au moins un autre noeud du deuxième réseau, lesdites mesures étant réalisées pour au moins deux fréquences de canal d'émission différentes dudit signal, lesdites au moins deux fréquences de canal d'émission appartenant à une même bande de fréquence.

10. Procédé selon l'une des revendications précédentes, **caractérisé en ce que** le deuxième réseau est un réseau maillé.

11. Procédé selon l'une des revendications précédentes, **caractérisé en ce que** le premier réseau utilise une première bande de fréquences et le deuxième réseau utilise une deuxième bande de fréquences différente de la première bande de fréquences.

12. Procédé selon la revendication 11, **caractérisé en ce que** la différence entre la première bande de fréquences et la deuxième bande de fréquence est inférieure à deux octaves.

13. Procédé selon l'une quelconque des revendications 5 à 12, **caractérisé en ce qu'**il comprend une étape de requête pour obtenir la au moins une partie du bilan de liaison du deuxième réseau.

14. Dispositif configuré pour la configuration d'un premier réseau sans fil comprenant au moins un point d'accès, **caractérisé en ce que** ledit dispositif comprend des moyens de configuration d'au moins un paramètre dudit au moins un point d'accès du premier réseau sans fil en fonction d'au moins une partie d'un bilan de liaison d'un deuxième réseau sans fil comprenant au moins deux noeuds, lesdits noeuds étant positionnés dans un espace physique déterminé, lesdits premier et deuxième réseaux sans fil étant physiquement différents, la densité de répartition des noeuds du deuxième réseau dans ledit espace physique étant supérieure à la densité de répartition de points d'accès du premier réseau dans ledit espace physique.

## Patentansprüche

1. Verfahren zur Konfiguration eines ersten drahtlosen Netzwerks, das mindestens einen Zugangspunkt umfasst, dadurch gegenzeichnet, dass es einen Schritt zur Konfiguration von mindestens einem Parameter des besagten mindestens einen Zugangspunkts des ersten drahtlosen Netzwerks umfasst, in Abhängigkeit von mindestens einem Teil einer Leistungsübertragungsbilanz eines zweiten drahtlosen Netzwerks, das mindestens zwei Knoten umfasst, wobei diese Knoten in einem bestimmten physikalischen Raum angeordnet sind, wobei dieses erste und zweite drahtlose Netzwerk physikalisch unterschiedlich sind, indem die Verteilungsdichte der Knoten des zweiten Netzwerks in dem besagten physikalischen Raum höher ist als die Verteilungsdichte von Zugangspunkten des ersten Netzwerks in dem besagten physikalischen Raum.

2. Verfahren nach Anspruch 1, **dadurch gekennzeichnet, dass** das erste drahtlose Netzwerk einen ersten physikalischen Kanal verwendet und das zweite drahtlose Netzwerk einen zweiten physikalischen Kanal verwendet, wobei dieser erste und zweite physikalische Kanal unterschiedlich sind.

3. Verfahren nach Anspruch 1 oder 2, **dadurch gekennzeichnet, dass** es einen Schritt zur Bestimmung des besagten physikalischen Raums umfasst, umfassend einen Schritt zum Speichern einer repräsentativen Information zu elementaren Zonen, die in dem physikalischen Raum enthalten sind, wobei diese elementaren Zonen jede mindestens einen Knoten des zweiten Netzwerks enthalten.

4. Verfahren nach Anspruch 3, **dadurch gekennzeichnet, dass** der Schritt zur Bestimmung des besagten physikalischen Raums unter anderem einen Schritt zum Speichern einer repräsentativen Information zu einer Ortung von mindestens einem Knoten in der elementaren Zone, die ihn enthält, umfasst.

5. Verfahren nach einem der Ansprüche 1 bis 4, **dadurch gekennzeichnet, dass** es einen Schritt zum Empfang des mindestens einen Teils der Leistungsübertragungsbilanz des zweiten Netzwerks umfasst.

6. Verfahren nach einem der Ansprüche 1 bis 5, **dadurch gekennzeichnet, dass** es einen Schritt zur Bestimmung des mindestens einen Teils der Leistungsübertragungsbilanz des zweiten Netzwerks umfasst.

7. Verfahren nach einem der Ansprüche 1 bis 6, **dadurch gekennzeichnet, dass** der besagte Parameter ausgewählt wird aus:

   - mindestens einem Raumparameter
   - mindestens einem Parameter der physikalischen Schicht
   - mindestens einem Parameter einer Schicht über der physikalischen Schicht

   oder eine beliebige Kombination aus diesen Parametern.

8. Verfahren nach einem der Ansprüche 1 bis 7, **dadurch gekennzeichnet, dass** der Schritt zur Konfiguration einen Schritt zur Bestimmung einer Leistungsübertragungsbilanz des ersten Netzwerks in Abhängigkeit von der Leistungsübertragungsbilanz des zweiten Netzwerks umfasst.

9. Verfahren nach einem der Ansprüche 1 bis 8, **dadurch gekennzeichnet, dass** die Leistungsübertragungsbilanz des zweiten Netzwerks abhängig ist von Messungen zur Empfangsstärke eines Signals, ausgesendet von mindestens einem Knoten und empfangen von mindestens einem anderen Knoten des zweiten Netzwerks, wobei die besagten Messungen für mindestens zwei unterschiedliche Sendekanalfrequenzen des besagten Signals durchgeführt werden, wobei die mindestens zwei Sendekanalfrequenzen zu demselben Frequenzband gehören.

10. Verfahren nach einem der vorstehenden Ansprüche, **dadurch gekennzeichnet, dass** das zweite Netzwerk ein vermaschtes Netzwerk ist.

11. Verfahren nach einem der vorstehenden Ansprüche, **dadurch gekennzeichnet, dass** das erste Netzwerk ein erstes Frequenzband verwendet und das zweite Netzwerk ein zweites Frequenzband verwendet, das sich von dem ersten Frequenzband unterscheidet.

12. Verfahren nach Anspruch 11, **dadurch gekennzeichnet, dass** die Differenz zwischen dem ersten Frequenzband und dem zweiten Frequenzband weniger als zwei Oktaven beträgt.

13. Verfahren nach einem der Ansprüche 5 bis 12, **dadurch gekennzeichnet, dass** es einen Schritt zum Abrufen enthält, um den mindestens einen Teil der Leistungsübertragungsbilanz des zweiten Netzwerks zu erhalten.

14. Vorrichtung, konfiguriert für die Konfiguration eines ersten drahtlosen Netzwerks, das mindestens einen Zugangspunkt umfasst, **dadurch gekennzeichnet, dass** die besagte Vorrichtung Mittel zur Konfiguration von mindestens einem Parameter des besagten mindestens einen Zugangspunkts des ersten drahtlosen Netzwerks umfasst, in Abhängigkeit von mindestens einem Teil einer Leistungsübertragungsbilanz eines zweiten drahtlosen Netzwerks, das mindestens zwei Knoten umfasst, wobei diese Knoten in einem bestimmten physikalischen Raum angeordnet sind, wobei dieses erste und zweite drahtlose Netzwerk physikalisch unterschiedlich sind, indem die Verteilungsdichte der Knoten des zweiten Netzwerks in dem besagten physikalischen Raum höher ist als die Verteilungsdichte von Zugangspunkten des ersten Netzwerks in dem besagten physikalischen Raum.

## Claims

1. Method for configuration of a first wireless network comprising at least one access point, **characterized in that** it comprises a step of configuration of at least one parameter of said at least one access point of the first wireless network according to at least one part of a link budget of a second wireless network comprising at least two nodes, said nodes being positioned in a determined physical space, said first and second wireless networks being physically different, the distribution density of the nodes of the second network in said physical space being greater than the distribution density of the access points of the first network in said physical space.

2. Method according to claim 1, **characterized in that** the first wireless network uses a first physical channel and the second wireless network uses a second physical channel, the first and second physical channels being different.

3. Method according to claim 1 or 2, **characterized in that** it comprises a step of determination of said physical space comprising a step of memorisation of an item of information representative of elementary zones comprised in the physical space, said elementary zones each comprising at least one node of the second network.

4. Method according to claim 3, **characterized in that** the step of determination of said physical space also comprises a step of memorisation of an item of information representative of a location of at least one node in the elementary zone comprising it.

5. Method according to any one of claims 1 to 4, **characterized in that** it comprises a step of reception of the at least one part of the link budget of the second network.

6. Method according to any one of claims 1 to 5, **characterized in that** it comprises a step of determination of the at least one part of the link budget of the second network.

7. Method according to any of claims 1 to 6, **characterized in that** said parameter is selected from among:

   - at least one spatial parameter;
   - at least one physical layer parameter;
   - at least one upper layer parameter of the physical layer; or any combination of these parameters.

8. Method according to any one of claims 1 to 7, **characterized in that** the step of configuration comprises a step of determination of a link budget of the first network according to the link budget of the second network.

9. Method according to any one of claims 1 to 8, **characterized in that** the link budget of the second network is according to measurements of received power of a signal transmitted by at least one node and received by at least one other node of the second network, said measurements being carried out for at least two different transmission channel frequencies of said signal, said at least two transmission channel frequencies belonging to a same frequency band.

10. Method according to one of the preceding claims, **characterized in that** the second network is a mesh network.

11. Method according to one of the preceding claims, **characterized in that** the first network uses a first band of frequencies and the second network uses a second band of frequencies different to the first band of frequencies.

12. Method according to claim 11, **characterized in that** the difference between the first band of frequencies and the second band of frequencies is less than two octaves.

13. Method according to any one of claims 5 to 12, **characterized in that** it comprises a step of request to obtain the at least one part of the link budget of the second network.

14. Device configured for the configuration of a first wireless network comprising at least one access point, **characterized in that** said device comprises means of configuration of at least one parameter of said at least one access point of the first wireless network according to at least one part of a link budget of a second wireless network comprising at least two nodes, said nodes being positioned in a determined physical space, said first and second wireless networks being physically different, the distribution density of the nodes of the second network in said physical space being greater than the distribution density of the access points of the first network in said physical space.

**Fig 1**

**Fig 2**

3

N

31

CPU

32

ROM

| Prog | 320 |
| Paramètres couche phy | 321 |

34

36

RX

37

TX

33

RAM

| Prog | 330 |
| Paramètres transmission | 331 |
| Paramètres réception | 332 |
| Données entrée | 333 |
| Données codées | 334 |
| ID partition physique | 335 |
| Paramètres qualité de réception | 336 |

38

I/F appli

**Fig 3**

40

Init

Configuration de paramètres de points
d'accès du 1er réseau

41

**Fig 4**

50 ⟶ ( Init )

```
┌─────────────────────────────────────────┐
│  Détermination d'un espace physique      │
└─────────────────────────────────────────┘
                                          ⟍ 51
┌─────────────────────────────────────────┐
│  Requête pour obtenir tout ou partie du  │
│  bilan de liaison du 2ᵉᵐᵉ réseau         │
└─────────────────────────────────────────┘
                                          ⟍ 52
┌─────────────────────────────────────────┐
│  Réception de tout ou partie du bilan de │
│  liaison du 2ᵉᵐᵉ réseau                  │
└─────────────────────────────────────────┘
                                          ⟍ 53
┌─────────────────────────────────────────┐
│  Détermination de tout ou partie du      │
│  bilan de liaison du 2ᵉᵐᵉ réseau         │
└─────────────────────────────────────────┘
                                          ⟍ 54
┌─────────────────────────────────────────┐
│  Détermination du bilan de liaison du    │
│  1ᵉʳ réseau                              │
└─────────────────────────────────────────┘
                                          ⟍ 55
┌─────────────────────────────────────────┐
│  Configuration de paramètres de points   │
│  d'accès du 1ᵉʳ réseau                   │
└─────────────────────────────────────────┘
                                          ⟍ 56
```

**Fig 5**

**EP 2 404 479 B1**

**Documents brevets cités dans la description**

- EP 1670183 A